(19) Europäisches Patentamt
European Patent Office
Office européen des brevets

(11) **EP 3 053 652 B1**

(12) **FASCICULE DE BREVET EUROPEEN**

(45) Date de publication et mention de la délivrance du brevet:
**06.06.2018 Bulletin 2018/23**

(51) Int Cl.:
***B01L 3/00*** *(2006.01)* ***B29C 59/02*** *(2006.01)*

(21) Numéro de dépôt: **16153554.7**

(22) Date de dépôt: **01.02.2016**

(54) **DISPOSITIF MICROFLUIDIQUE ET PROCÉDÉ DE RÉALISATION D'UN DISPOSITIF MICROFLUIDIQUE**

MIKROFLUIDIK-VORRICHTUNG UND VERFAHREN ZUR REALISIERUNG EINER MIKROFLUIDIK-VORRICHTUNG

MICROFLUIDIC DEVICE AND PROCESS FOR MAKING A MICROFLUIDIC DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2015 FR 1550808**

(43) Date de publication de la demande:
**10.08.2016 Bulletin 2016/32**

(73) Titulaires:
• **Commissariat à l'Énergie Atomique et aux Énergies Alternatives 75015 Paris (FR)**
• **Institut Polytechnique de Grenoble 38031 Grenoble Cedex 1 (FR)**
• **Arjo Wiggins Fine Papers Limited Manchester M1 5ES (GB)**

(72) Inventeurs:
• **BERTHIER, Jean 38240 Meylan (FR)**
• **GOSSELIN, David 38000 Grenoble (FR)**
• **BELGACEM, Naceur 38320 Brie et Angonnes (FR)**
• **CHAUSSY, Didier 38320 Brie et Angonnes (FR)**
• **DEPRES, Gaël Georges,Félix 38850 Chirens (FR)**
• **Baumlin, Jean-Marie 62223 Anzin-Saint-Aubin (FR)**

(74) Mandataire: **Brevalex 56, Boulevard de l'Embouchure B.P. 27519 31075 Toulouse Cedex 2 (FR)**

(56) Documents cités:
WO-A1-2013/181506    WO-A1-2013/181656
DE-A1-102004 005 337    US-A1- 2004 084 402
US-A1- 2006 057 209    US-A1- 2013 001 826
US-A1- 2014 037 516    US-A1- 2014 106 382

## Description

## DOMAINE TECHNIQUE

La présente invention concerne le domaine général de la microfluidique et plus particulièrement, la réalisation d'un dispositif microfluidique portable de faibles coûts destiné à la manipulation d'un liquide.

## ÉTAT DE LA TECHNIQUE ANTÉRIEURE

Dans de nombreux domaines, on cherche à manipuler et analyser des échantillons liquides de petit volume de la manière la plus simple et la moins intrusive possible. Ce peut être le cas, par exemple, pour établir des interactions biologiques et/ou chimiques entre des solutions pour une analyse chimique, un diagnostic biologique ou médical, ou encore dans le domaine du génie génétique ou agro-alimentaire.

En effet, la microfluidique permet d'effectuer des manipulations et analyses sur de petits échantillons de liquide (de l'ordre de quelques dizaines de microlitres à quelques millilitres) en ayant une grande sensibilité.

En général, les circuits microfluidiques sont réalisés par assemblage de deux plaques, avec au moins l'une des deux gravée et structurée par exemple, par photolithographie ou usinage pour former les rainures souhaitées. Les circuits peuvent aussi être réalisés en coulant des matériaux réticulants de type PDMS sur des moules préalablement usinés par les méthodes précédemment citées. En outre, la fabrication des dispositifs microfluidiques nécessite des équipements du type salle blanche impliquant des moyens et des temps de fabrication importants.

Il existe actuellement une technologie moins coûteuse consistant à créer des circuits microfluidiques sur du papier par embossage décrite par exemple dans la demande de brevet WO2013181656.

Une première étape de cette technique consiste en l'embossage du papier grâce à un moule et contremoule afin de créer les canaux. Ensuite une silanisation est effectuée avec du $R^FSiCl_3$ (trichloro-(1H,1H,2H,2H-perfluorooctyl) silane, $CF_3(CF_2)_5(CH)_2SiCl_3$). La silanisation du papier a pour objectif d'éviter l'imbibition du liquide au sein du papier en le rendant omniphobique. Des angles de contact entre 135° et 155° avec de l'eau peuvent ainsi être atteints. Enfin les canaux sont fermés avec un film adhésif transparent (« Fellowes adhesive sheet », PET/EVA/LDPE). L'écoulement est alors possible en imposant une pression positive à l'entrée du circuit via des pompes ou des pousse-seringues.

Toutefois, l'utilisation de pompes ou autres appareillages pour effectuer des écoulements forcés implique des coûts supplémentaires et des problèmes de portabilité et en particulier dans le domaine médical pour des systèmes de diagnostic portables.

L'objet de la présente invention est de remédier aux inconvénients précités en proposant un dispositif microfluidique portable et moins coûteux ainsi qu'un procédé simple pour la fabrication d'un tel dispositif.

## EXPOSÉ DE L'INVENTION

L'invention a pour objet un procédé de réalisation d'un dispositif microfluidique destiné à la manipulation d'un liquide, comportant une étape d'embossage d'un circuit microfluidique sur une surface d'un substrat de papier apte à être déformé par embossage, ladite surface étant étanche au liquide et hydrophile et ledit circuit microfluidique comprenant au moins un canal adapté pour générer un écoulement spontané capillaire du liquide.

En effet, les dimensions du canal sont configurées pour satisfaire la condition d'écoulement spontanée :

$$\frac{p_f}{p_w} < \cos(\theta)$$

où pf est le périmètre de la section du canal au contact de l'air, pw le périmètre de cette section au contact du papier et $\theta$ l'angle de contact (i.e. l'angle formé entre une goutte du liquide et le substrat).

Ce procédé permet de réaliser de manière simple et rapide un dispositif microfluidique précis, portable, robuste et à très faibles coûts. Ladite surface étanche et hydrophile est réalisée par un traitement de surface comportant le recouvrement d'une surface du substrat par une première couche étanche et ensuite par une seconde couche hydrophile recouvrant ladite première couche étanche.

Avantageusement, la première couche étanche est une couche constituée d'un matériau étanche du type Styrène Butadiène d'épaisseur entre environ 10 μm et 30 μm et la couche hydrophile est une couche constituée d'un polymère hydrophile d'épaisseur entre environ 1 μm et 3 μm.

Avantageusement le substrat est un papier ayant un Cobb inférieur à 35 g/m².

Avantageusement, le substrat est un papier de plus de 400 microns d'épaisseur ayant une main supérieure à 1, une rugosité Bendtsen inférieure à 200 mL/mn et une perméabilité à l'air Bendtsen inférieure à 100 mL/mn

Selon un premier mode de réalisation, ledit embossage du circuit microfluidique est réalisé après ledit traitement de surface.

Selon un deuxième mode de réalisation, ledit embossage du circuit microfluidique est réalisé avant ledit traitement de surface.

L'invention porte également sur un dispositif microfluidique destiné à manipuler un liquide, comportant :

- un substrat constitué d'un matériau en papier, apte à être déformé par embossage,

- un circuit microfluidique embossé sur une surface dudit substrat, ladite surface étant recouverte par une première couche étanche au liquide et par une seconde couche hydrophile recouvrant ladite première couche étanche, et ledit circuit microfluidique comprenant au moins un canal adapté pour générer un écoulement spontané capillaire du liquide.

Ce dispositif à faible coût permet une grande facilité d'utilisation et de portabilité sans aucun appareillage.

Avantageusement, le circuit microfluidique comporte :

- un port d'entrée adapté pour recevoir un liquide, et
- au moins une zone de collection ou d'observation connectée audit port d'entrée par ledit au moins un canal fluidique.

Avantageusement, chaque canal fluidique présente une structure choisie parmi les formes suivantes : triangulaire, trapézoïdale, rectangulaire, forme en U.

Avantageusement, chaque canal fluidique définit une largeur entre environ 10 $\mu$m et 100 $\mu$m, une profondeur entre environ 50 $\mu$m et 500 $\mu$m, et une longueur entre quelques millimètres et quelques dizaines de centimètres.

Avantageusement, le circuit microfluidique peut être un circuit ouvert ou au moins en partie fermé comportant un film transparent couvrant ledit au moins un canal.

D'autres avantages et caractéristiques de l'invention apparaîtront dans la description détaillée non limitative ci-dessous.

## BRÈVE DESCRIPTION DES DESSINS

On décrira à présent, à titre d'exemples non limitatifs, des modes de réalisation de l'invention, en se référant aux dessins annexés, dans lesquels :

- la Fig. 1 illustre de manière schématique un procédé de réalisation d'un dispositif microfluidique selon un premier mode de réalisation préféré de l'invention ;

- la Fig. 2 illustre de manière schématique un procédé de réalisation d'un dispositif microfluidique selon un deuxième mode de réalisation préféré de l'invention ;

- la Fig. 3 illustre de manière schématique un dispositif microfluidique selon un mode de réalisation préféré de l'invention ; et

- les Figs. 4A-4B illustrent de manière schématique un dispositif microfluidique selon un autre mode de réalisation préféré de l'invention.

## EXPOSÉ DÉTAILLÉ DES MODES DE RÉALISATION PRÉFÉRÉS

Le principe de l'invention est de prendre avantage des forces capillaires pour générer un écoulement spontané dans un circuit microfluidique ne nécessitant ainsi aucun appareillage.

Le procédé de réalisation d'un dispositif microfluidique consiste à utiliser un matériau souple comme substrat apte à être déformé par embossage pour former sur une surface du substrat un circuit microfluidique dont les parois sont à la fois étanches et hydrophiles. Par surface étanche, on entend une surface étanche au liquide c'est-à-dire, permettant au liquide de s'écouler sur la surface sans qu'il soit filtré ou absorbé. Ceci permet un écoulement spontané capillaire d'un liquide dans un ou plusieurs canaux du circuit. Par embossage, on entend selon l'invention la formation d'un motif en creux sur une surface d'un substrat par la pression d'un motif en relief.

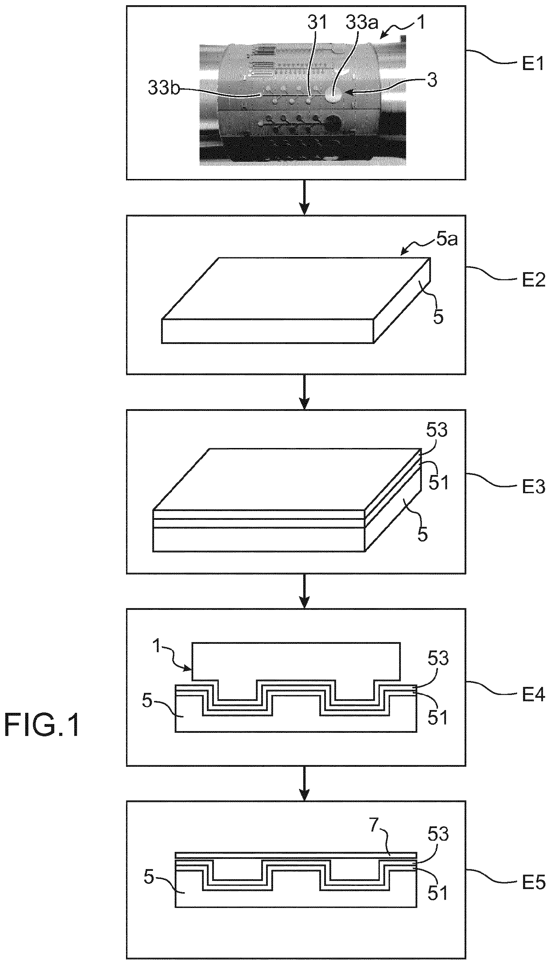

La Fig. 1 illustre de manière schématique un procédé de réalisation d'un dispositif microfluidique selon un premier mode de réalisation préféré de l'invention.

L'étape E1 consiste en la fabrication d'un moule 1 de forme cylindrique ou plane comportant au moins un motif en relief 3 représentant la forme du circuit microfluidique que l'on désire réaliser en creux sur un substrat (de type papier). Le motif en relief comporte au moins une fine bande 31 en relief définissant une largeur entre environ 10 $\mu$m et 100 $\mu$m, voire 500 $\mu$m, une épaisseur entre environ 50 $\mu$m et 500 $\mu$m, voire 1 mm, et une longueur entre quelques millimètres et quelques dizaines de centimètres adapté pour former un canal des mêmes dimensions. Plus particulièrement, les dimensions de la bande 31 sont choisies afin de satisfaire la condition d'écoulement spontanée :

$$\frac{p_f}{p_w} < \cos(\theta)$$

où pf est le périmètre de la section du canal au contact de l'air, pw le périmètre de cette section au contact du papier et $\theta$ l'angle de contact. Le terme angle de contact désigne l'angle formé entre une goutte du liquide et le substrat. Lorsque l'angle de contact est inférieur à 90°, le substrat est dit hydrophile.

En outre, le motif en relief 3 peut être configuré pour former un ensemble de rainures en forme de U ou de V permettant d'augmenter le débit d'un liquide s'écoulant dans ces rainures.

Le motif en relief 3 comporte également des protubérances 33a, 33b par exemple en forme de disques de différentes dimensions pour former sur le substrat des zones de réception ou réservoirs 33a ainsi que des zones de dépression ou de collecte 33b. On notera que les motifs en relief peuvent par exemple être gravés par gravure laser sur un cylindre ou plaque en acier. En variante, les motifs peuvent être réalisés par une impression 3D ou par une toute autre technique adaptée.

L'étape E2 consiste à préparer un substrat 5 plan constitué d'un matériau souple apte à être déformé de manière durable par embossage. Le substrat 5 est en papier apte à être embossé sans modification de son intégrité, en particulier les fibres sont pour toute ou partie des fibres longues de cellulose issues de résineux ou des fibres plastiques coupées de plus de 4mm. De préférence l'épaisseur du papier est supérieure à 400 microns et sa main supérieure à 1. Avantageusement les fibres sont traitées hydrophobes et la porosité à l'air est faible afin que le dépôt en phase aqueuse de la première couche en contact avec les fibres du papier ne pénètre pas trop au sein du papier. Le Cobb est donc inférieur à 35 g/m$^2$ et la perméabilité à l'air Bendtsen inférieure à 100 mL/mn et de préférence inférieure à 50 mL/mn. Pour que la surface finale du produit soit lisse, on peut choisir une base papier dont la rugosité Bendtsen soit inférieure à 200 mL/mn et de préférence inférieur à 100 mL/mn.

Selon un mode de réalisation particulier, on peut utiliser un papier de type calque afin d'avoir une certaine transparence du support. Ce type de papier peut présenter un intérêt pour des applications biologiques où la lecture se fait par microscope/CMOS et la détection par colorimétrie.

L'avantage de réaliser l'embossage sur du papier permet de fabriquer des systèmes microfluidiques peu chers et facilement reproductibles.

L'étape E3 consiste à traiter une surface 5a du substrat 5 pour la rendre étanche et hydrophile. On utilise un revêtement composé de deux couches. On recouvre la surface du substrat 5 par une première couche étanche 51 et ensuite par une seconde couche hydrophile 53 recouvrant la première couche étanche. Plus particulièrement, la première couche étanche est réalisée en appliquant sur la surface du substrat un matériau étanche du type Styrène Butadiène d'épaisseur entre environ 10 μm et 30 μm et de préférence d'environ 20 μm. Cette couche hydrophobe présente une épaisseur et une souplesse permettant d'éviter les craquelures et assure donc une bonne étanchéité du circuit fluidique même après l'embossage. En outre, la seconde couche hydrophile est réalisée en appliquant une fine couche d'un polymère hydrophile (du type PVA ou PVA-Ethylène) d'épaisseur entre environ 1 μm et 3 μm sur la première couche étanche.

Suivant un mode de réalisation particulier, les couches sont appliquées de préférence par voie liquide à l'aide de solutions aqueuses. On peut alors utiliser une des techniques suivantes pour les appliquer sur le support : couchage à la tournette (spin coating), à la barre de Mayer, par trempage (dip coating), par report de cylindre, par presse encolleuse (size presse), par film presse, par couchage à la lame, couchage à la lame d'air, couchage par gravure, couchage par gravure offset, couchage au ménisque et couchage rideau.

L'étape E4 consiste à poser le moule 1 sur la surface étanche et hydrophile du substrat 5 et à appliquer une pression prédéterminée pour embosser sur cette surface au moins un circuit microfluidique 6 correspondant à la forme en relief 3 configuré sur le moule 1. L'embossage est fait à température ambiante et sans humidification du support. De préférence, la pression appliquée par le moule 1 sur le substrat est comprise entre environ 10 bars et 60 bars.

En variante, l'embossage est avantageusement réalisé à chaud et avec humidification du support.

Une autre variante consiste à utiliser deux moules ou matrices complémentaires l'une male l'autre femelle ; le papier étant alors déformé de part et d'autre en même temps des deux côtés.

On notera que selon la forme du motif en relief 3, le matériau du substrat 5 et la pression appliquée, on peut réaliser des canaux ayant une section de forme triangulaire, trapézoïdale, rectangulaire, arrondie, etc.

Ainsi, grâce à la mise en oeuvre d'une surface hydrophile et au choix des dimensions du motif en relief 3, le procédé selon l'invention permet de réaliser un canal fluidique dans lequel un liquide peut s'écouler spontanément par capillarité sans aucun moyen de pompage.

En outre, la mise en oeuvre d'une surface étanche permet au liquide de ne pas être filtré ou absorbé par le substrat et par conséquent, permet de collecter le liquide par exemple par pipetage à une extrémité d'un canal. De plus, le dispositif microfluidique peut être facilement utilisé dans des régions humides.

Avantageusement le circuit microfluidique 6 formé sur le substrat 5 est un circuit ouvert permettant une accessibilité facile pour par exemple réaliser un prélèvement adapté pour certains types d'application.

En variante, le procédé peut comporter une étape supplémentaire mais optionnelle E5 consistant à recouvrir au moins une partie du circuit microfluidique 6 par un film adhésif 7 ou autre capot étanche afin de former un circuit fermé adapté pour d'autres types d'applications. Cet élément pouvant être hydrophile ou hydrophobe, il suffit que la condition d'écoulement spontanée soit respectée :

$$\sum_i p_{wi} \cos(\theta_i) > 0$$

où pw$_i$ représente le périmètre mouillé par le matériau i, et $\theta_i$ l'angle de contact du matériau i.

Avantageusement, on laisse ouvert les parties du circuit microfluidique aux niveaux des zones de collecte afin de faciliter les prélèvements.

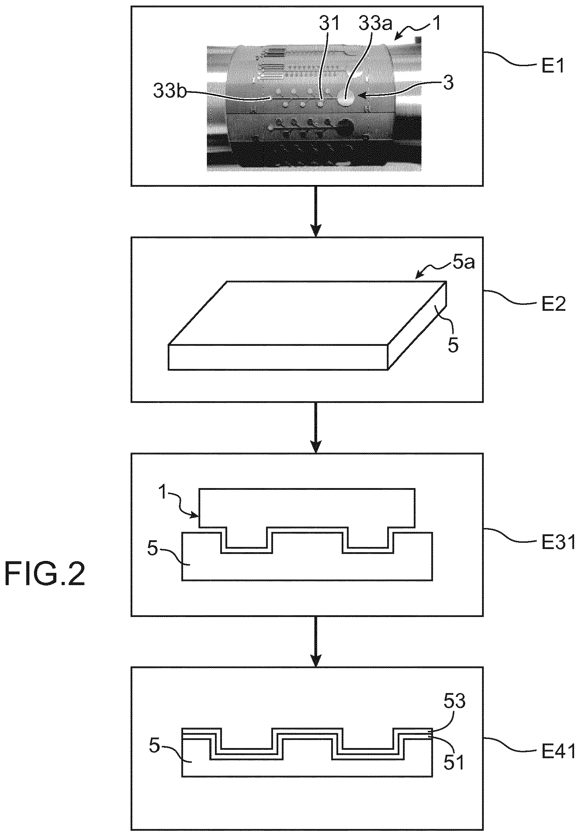

La Fig. 2 illustre de manière schématique un procédé de réalisation d'un dispositif microfluidique selon un deuxième mode de réalisation préféré de l'invention.

Ce deuxième mode de réalisation se distingue de celui du premier mode de réalisation par le fait que l'embossage du circuit microfluidique 6 est réalisé avant le traitement de surface et non pas après ce traitement.

Ainsi, comme précédemment, les étapes E1 et E2 consiste en la fabrication d'un moule 1 et à la préparation d'un substrat 5 plan constitué d'un matériau souple apte à être déformé de manière durable par le moule.

L'étape E31 consiste à poser le moule 1 sur une surface 5a non traitée du substrat 5 et à appliquer une pression prédéterminée entre environ 10 bars et 50 bars pour embosser sur cette surface au moins un circuit microfluidique 6. L'embossage peut être réalisé à chaud ou à froid selon le matériau du substrat 5.

L'étape E41 consiste à traiter la surface du substrat sur laquelle le circuit microfluidique 6 est formé. On utilise comme dans l'étape E3 du premier mode de réalisation, un revêtement composé d'une première couche étanche 51 (par exemple Styrène Butadiène) d'épaisseur entre environ 10 μm et 30 μm et d'une seconde couche hydrophile 53 (PVA ou PVA-Ethylène) d'épaisseur entre environ 1 μm et 3 μm recouvrant la première couche étanche, ou par un revêtement de type Silicé. Un traitement plasma peut également convenir, bien que moins stable et moins robuste.

Selon un exemple de réalisation suivant l'invention, le substrat peut comporter avantageusement trois brins de papier contrecollés et laminés ensembles pour constituer une base papier de 810 g/m² avec une main de 1,05. Le brin inférieur est un papier de 230 g/m², le brin du milieu est un papier de 350 g/m², le brin supérieur est un papier ayant une couche pigmentaire en surface, ce papier de 219 g/m² est un papier de marque Power-Coat®. La perméabilité à l'air de la base (brin inférieur) est inférieure à 5 mL/mn, la rugosité Bendtsen est inférieure à 20 mL/mn et le Cobb est inférieur à 5 g/m².

Une première couche composée de 18 g/m² de Latex de méthacrylate Styrène Butadiène (Synthomer 10656) est appliquée à la barre de Mayer sur la base papier et séchée. La deuxième couche est constituée de 1,6 g/m² d'un copolymère d'alcool d'éthylène vinylique (Exceval RS 2117) solubilisé dans de l'eau afin d'être appliqué à la barre de Mayer au-dessus de la couche précédente.

Le produit ainsi formé est embossé sur une presse constituée de deux matrices cylindriques entre lesquels le papier est placé. La matrice inferieure est lisse, la matrice supérieure est constituée de reliefs qui sont dupliqués en négatif par embossage sur le papierformant ainsi un ensemble de réservoirs et de canaux. Avantageusement, les canaux peuvent être ensuite recouverts par un film plastique adhésif.

Lorsque l'ensemble est positionné à l'horizontal et que de l'eau colorée est déposée dans les réservoirs, il est observé qu'un écoulement d'eau coloré se produit naturellement dans l'espaces confinés des canaux.

La perméabilité à l'air Bendtsen est mesurée suivant la norme ISO 5636/3, la rugosité Bendtsen est mesurée suivant la norme NFQ 03-049, le Cobb est mesuré suivant la norme ISO535 à 1mn.

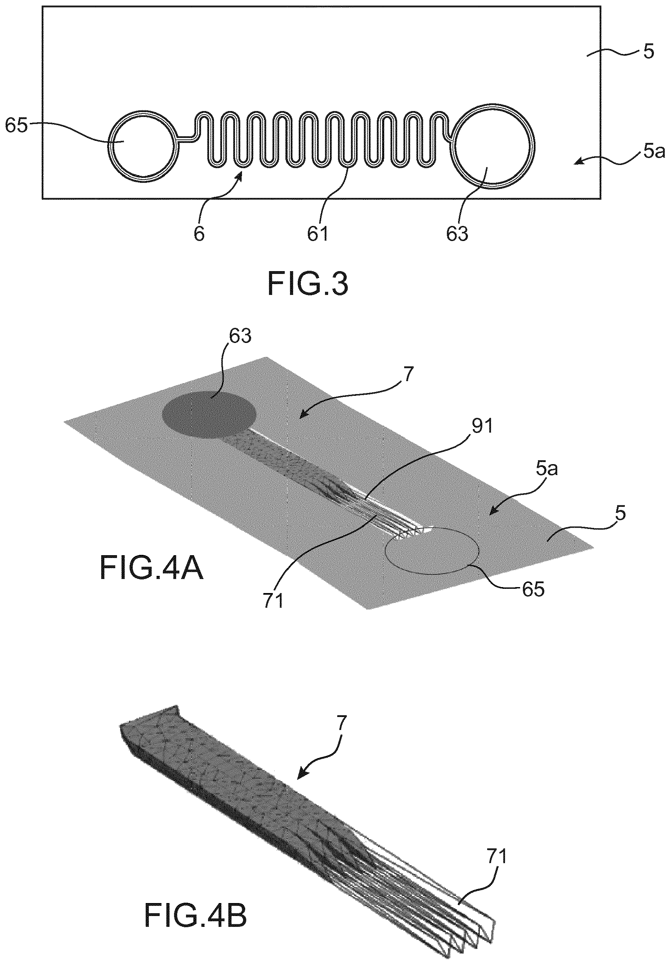

La Fig. 3 illustre de manière schématique un dispositif microfluidique selon un mode de réalisation préféré de l'invention.

Le dispositif microfluidique est constitué d'un substrat 5 de papier comportant une surface 5a sur laquelle un circuit microfluidique 6 a été embossé selon le procédé de la présente invention. En effet, on choisit un matériau du substrat adapté pour être déformé de manière durable par embossage.

Le circuit microfluidique 6 comprend au moins un canal fluidique 61 adapté pour générer un écoulement spontané capillaire du liquide. En effet, les parois du canal fluidique 61 et éventuellement de tout le circuit microfluidique 6 sont étanches et hydrophiles. Plus généralement, la surface 5a sur laquelle le circuit microfluidique 6 est embossé est étanche et hydrophile. En outre, le canal fluidique 61 peut présenter un profil triangulaire, trapézoïdal, rectangulaire, ou arrondi et définit une largeur entre environ 10 μm et 100 μm, voire 500 μm, une profondeur entre environ 50 μm et 500 μm, voire 1 mm, et une longueur entre quelques millimètres et quelques dizaines de centimètres.

En outre, le circuit microfluidique 6 comprend un port d'entrée 63 adapté pour recevoir un liquide et au moins une zone de collection ou d'observation 65 connectée au port d'entrée 63 par le canal fluidique 61.

Avantageusement, le circuit microfluidique 6 est un circuit ouvert permettant une grande accessibilité pour le prélèvement d'un liquide ce qui est particulièrement intéressant dans les domaines biologiques ou médicaux. En variante, le circuit microfluidique 6 peut être un circuit fermé ou en partie fermé comportant un capot étanche, par exemple un film transparent, couvrant le canal ou canaux fluidique(s).

Les Figs. 4A et 4B illustrent de manière schématique un dispositif microfluidique selon un autre mode de réalisation préféré de l'invention.

Comme précédemment, le dispositif microfluidique est constitué d'un substrat 5 comprenant un circuit microfluidique 6 embossé sur une surface 5a du substrat. Avantageusement, selon ce mode de réalisation, le circuit microfluidique 6 est un circuit ouvert comprenant au moins un chemin fluidique 7 formé d'un ensemble de microsillons ou rainures 71 (voir Fig. 4B). Chaque rainure 71 permet d'augmenter l'aire $dA_w$ du liquide en contact avec les parois de la rainure 71 par rapport à l'aire $dA_f$ du liquide libre (i.e. l'aire du liquide n'étant pas en contact avec les parois). Ceci permet d'établir un écoulement spontané d'un liquide dans les rainures 71 avec même un angle de contact $\theta$ de l'ordre de 70° à 85° (i.e. un liquide très légèrement mouillant) sachant que l'écoulement spontané dans une rainure est conditionné par la relation suivante :

$$\frac{dA_f}{dA_w} < \cos\theta$$

Aussi, des rainures 71 avec des sillons suffisamment étroits et profonds sur une surface 5a étanche et hydrophile présentent une force capillaire largement amplifiée dans le sens des sillons pour un liquide dont l'angle de contact de Young peut aller jusqu'à près de 85°.

Ceci peut être avantageusement mis à profit pour acheminer des liquides dans des systèmes à bandelettes (lab-on-paper) et à puits virtuels. On notera que les bandelettes communément utilisées dans le prélèvement de liquides biologiques retiennent une grande partie du liquide et peuvent exercer un effet indésirable de filtrage du liquide et ne sont pas appropriées aux climats humides.

Le dispositif microfluidique selon la présente invention permet donc une grande accessibilité et robustesse, une facilité d'utilisation et de portabilité et un faible coût de fabrication tout en permettant des grandes distances de parcours même pour des fluides visqueux. Ainsi, ce dispositif est particulièrement intéressant pour l'analyse des liquides biologiques en tant que système de diagnostic portables du type POC.

## Revendications

1. Procédé de réalisation d'un dispositif microfluidique destiné à la manipulation d'un liquide, **caractérisé en ce qu'**il comporte une étape d'embossage d'un circuit microfluidique (6) sur une surface d'un substrat (5) en papier apte à être déformé par embossage, ladite surface étant rendue étanche au liquide et hydrophile par un traitement de surface comportant le recouvrement de ladite surface du substrat (5) par une première couche étanche (51) et ensuite par une seconde couche hydrophile (53) recouvrant ladite première couche étanche, et ledit circuit microfluidique comprenant au moins un canal adapté pour générer un écoulement spontané capillaire du liquide.

2. Procédé selon la revendication 1, **caractérisé en ce que** la première couche étanche est une couche constituée d'un matériau étanche du type Styrène Butadiène d'épaisseur entre 10 $\mu$m et 30 $\mu$m.

3. Procédé selon la revendication 1 ou 2, **caractérisé en ce que** la couche hydrophile est une couche constituée d'un polymère hydrophile d'épaisseur entre 1 $\mu$m et 3 $\mu$m ou d'une couche de Silice

4. Procédé selon l'une quelconque des revendications précédentes, **caractérisé en ce que** le substrat est un papier ayant un Cobb inférieur à 35 g/m$^2$.

5. Procédé selon l'une quelconque des revendications précédentes, **caractérisé en ce que** le substrat est un papier de plus de 400 microns d'épaisseur ayant une main supérieure à 1, une rugosité Bendtsen inférieure à 200 mL/mn et une perméabilité à l'air Bendtsen inférieure à 100 mL/mn

6. Procédé selon l'une quelconque des revendications 1 à 5, **caractérisé en ce que** ledit embossage du circuit microfluidique (6) est réalisé après ledit traitement de surface.

7. Procédé selon l'une quelconque des revendications 1 à 5, **caractérisé en ce que** ledit embossage du circuit microfluidique (6) est réalisé avant ledit traitement de surface.

8. Dispositif microfluidique destiné à manipuler un liquide, comportant :

   - un substrat (5) constitué d'un matériau en papier apte à être déformé par embossage,
   - un circuit microfluidique (6) embossé sur une surface dudit substrat, ladite surface étant recouverte par une première couche étanche au liquide et par une seconde couche hydrophile recouvrant ladite première couche étanche, et ledit circuit microfluidique comprenant au moins un canal (61) adapté pour générer un écoulement spontané capillaire du liquide.

9. Dispositif selon la revendication 8, **caractérisé en ce que** le circuit microfluidique comporte :

   - un port d'entrée (63) adapté pour recevoir un liquide, et
   - au moins une zone de collection ou d'observation (65) connectée audit port d'entrée par ledit au moins un canal fluidique.

10. Dispositif selon la revendication 8 ou 9, **caractérisé en ce que** chaque canal présente une structure choisie parmi les formes suivantes : triangulaire, trapézoïdale, rectangulaire, forme en U.

11. Dispositif selon l'une quelconque des revendications 8 à 10, **caractérisé en ce que** chaque canal définit une largeur entre 10 $\mu$m et 100 $\mu$m, voire 500 $\mu$m, et une profondeur entre 50 $\mu$m et 500 $\mu$m, voire 1 mm.

12. Dispositif selon l'une quelconque des revendications 8 à 11, **caractérisé en ce que** le circuit microfluidique (6) est un circuit ouvert.

13. Dispositif selon l'une quelconque des revendications 8 à 11, **caractérisé en ce que** le circuit microfluidique (6) est un circuit au moins en partie fermé comportant un élément étanche couvrant ledit au moins un canal.

**Patentansprüche**

1. Verfahren zum Herstellen einer Mikrofluidvorrichtung, die zur Handhabung einer Flüssigkeit bestimmt ist, **dadurch gekennzeichnet, dass** es einen Schritt des Aufprägens einer mikrofluidischen Schaltung (6) auf eine Oberfläche eines Substrats (5) aus Papier aufweist, das durch Prägung verformt werden kann, wobei die Oberfläche durch eine Oberflächenbehandlung flüssigkeitsdicht und hydrophil gemacht wird, welche das Überdecken der Oberfläche des Substrats (5) mit einer ersten dichten Schicht (51) und dann mit einer zweiten hydrophilen Schicht (53) umfasst, welche die erste dichte Schicht überdeckt, und die mikrofluidische Schaltung zumindest einen Kanal aufweist, der dazu ausgelegt ist, eine spontane Kapillarströmung der Flüssigkeit zu bewirken.

2. Verfahren nach Anspruch 1, **dadurch gekennzeichnet, dass** die erste dichte Schicht eine Schicht ist, die aus einem dichten Material vom Typ Styrol-Butadien mit einer Dicke zwischen 10 $\mu$m und 30 $\mu$m besteht.

3. Verfahren nach Anspruch 1 oder 2, **dadurch gekennzeichnet, dass** die hydrophile Schicht eine Schicht ist, die aus einem hydrophilen Polymer mit einer Dicke zwischen 1 $\mu$m und 3 $\mu$m oder aus einer Siliciumdioxidschicht besteht.

4. Verfahren nach einem der vorangehenden Ansprüche, **dadurch gekennzeichnet, dass** das Substrat ein Papier mit einem Cobb-Wert von unter 35 g/m$^2$ ist.

5. Verfahren nach einem der vorangehenden Ansprüche, **dadurch gekennzeichnet, dass** das Substrat ein Papier mit über 400 Mikron Dicke und einem spezifischen Volumen von über 1, einer Bendtsen-Rauheit von unter 200 mL/mn und einer Bendtsen-Luftdurchlässigkeit von unter 100 mL/mn ist.

6. Verfahren nach einem der Ansprüche 1 bis 5, **dadurch gekennzeichnet, dass** die Aufprägung der mikrofluidischen Schaltung (6) nach der Oberflächenbehandlung erfolgt.

7. Verfahren nach einem der Ansprüche 1 bis 5, **dadurch gekennzeichnet, dass** die Aufprägung der mikrofluidischen Schaltung (6) vor der Oberflächenbehandlung erfolgt.

8. Mikrofluidvorrichtung, die zur Handhabung einer Flüssigkeit bestimmt ist, enthaltend:

   - ein Substrat (5), das aus einem Papiermaterial besteht, das dazu geeignet ist, durch Prägung verformt zu werden,

   - eine mikrofluidische Schaltung (6), die einer Oberfläche des Substrats (5) aufgeprägt ist, wobei die Oberfläche mit einer ersten flüssigkeitsdichten Schicht und mit einer zweiten hydrophilen Schicht überdeckt ist, welche die erste dichte Schicht überdeckt, und die mikrofluidische Schaltung zumindest einen Kanal (61) aufweist, der dazu ausgelegt ist, eine spontane Kapillarströmung der Flüssigkeit zu bewirken.

9. Vorrichtung nach Anspruch 8, **dadurch gekennzeichnet, dass** die mikrofluidische Schaltung enthält:

   - einen Eingangsanschluss (63), der dazu ausgelegt ist, eine Flüssigkeit aufzunehmen, und
   - zumindest einen Sammel- bzw. Betrachtungsbereich (65), der mit dem Eingangsanschluss über den zumindest einen Strömungskanal verbunden ist.

10. Vorrichtung nach Anspruch 8 oder 9, **dadurch gekennzeichnet, dass** jeder Kanal eine Struktur ausgewählt aus den nachfolgenden Formen aufweist: dreieckig, trapezförmig, rechteckig, U-förmig.

11. Vorrichtung nach einem der Ansprüche 8 bis 10, **dadurch gekennzeichnet, dass** jeder Kanal eine Breite zwischen 10 $\mu$m und 100 $\mu$m bzw. 500 $\mu$m und eine Tiefe zwischen 50 $\mu$m und 500 $\mu$m bzw. 1 mm definiert.

12. Vorrichtung nach einem der Ansprüche 8 bis 11, **dadurch gekennzeichnet, dass** die mikrofluidische Schaltung (6) eine offene Schaltung ist.

13. Vorrichtung nach einem der Ansprüche 8 bis 11, **dadurch gekennzeichnet, dass** die mikrofluidische Schaltung (6) eine zumindest teilweise geschlossene Schaltung mit einem dichten Element ist, das den zumindest einen Kanal abdeckt.

**Claims**

1. A method for manufacturing a microfluidic device for handling a liquid, **characterised in that** it includes a step of embossing a microfluidic circuit (6) on a surface of a substrate (5) of paper able to be deformed by embossing, said surface being made liquid proof, and hydrophilic by a surface treatment including covering said surface of the substrate (5) with a first waterproof layer (51) and then by a second hydrophilic layer (53) covering said first waterproof layer, and said microfluidic circuit comprising at least one channel adapted to generate a spontaneous capillary flow of the liquid.

**2.** The method according to claim 1, **characterised in that** the first waterproof layer is a layer consisting of a styrene butadiene type waterproof material with a thickness between 10 $\mu$m and 30 $\mu$m.

**3.** The method according to claim 1 or 2, **characterised in that** the hydrophilic layer is a layer consisting of a hydrophilic polymer with a thickness between 1 $\mu$m and 3 $\mu$m or a silica layer.

**4.** The method according to any of the preceding claims, **characterised in that** the substrate is a paper having a Cobb value lower than 35 g/m$^2$.

**5.** The method according to any of the preceding claims, **characterised in that** the substrate is a paper with a thickness of more than 400 microns having a quire higher than 1, a Bendtsen roughness lower than 200 mL/min and a Bendtsen air permeability lower than 100 mL/min.

**6.** The method according to any of claims 1 to 5, **characterised in that** said embossing of the microfluidic circuit (6) is performed after said surface treatment.

**7.** The method according to any of claims 1 to 5, **characterised in that** said embossing of the microfluidic circuit (6) is made before said surface treatment.

**8.** A microfluidic device for handling a liquid, including:

- substrate (5) consisting of a material of paper able to be deformed by embossing,
- a microfluidic circuit (6) embossed on a surface of said substrate, said surface being covered with a first liquid proof layer and with a second hydrophilic layer covering said first waterproof layer, and said microfluidic circuit comprising at least one channel (61) adapted to generate a spontaneous capillary flow of the liquid.

**9.** The device according to claim 8, **characterised in that** the microfluidic circuit includes:

- an inlet port (63) adapted to receive a liquid, and
- at least one collecting or observing zone (65) connected to said inlet port through said at least one fluidic channel.

**10.** The device according to claim 8 or 9, **characterised in that** each channel has a structure chosen from the following shapes: triangular, trapezoidal, rectangular, U-shape.

**11.** The device according to any of claims 8 to 10, **characterised in that** each channel defines a width between 10 $\mu$m and 100 $\mu$m, or even 500 $\mu$m, and a depth between 50 $\mu$m and 500 $\mu$m, or even 1 mm.

**12.** The device according to any of claims 8 to 11, **characterised in that** the microfluidic circuit (6) is an open circuit.

**13.** The device according to any of claims 8 to 11, **characterised in that** the microfluidic circuit (6) is an at least partly closed circuit including a waterproof element covering said at least one channel.

FIG.1

FIG.2

FIG.3

FIG.4A

FIG.4B

**EP 3 053 652 B1**

## RÉFÉRENCES CITÉES DANS LA DESCRIPTION

**Documents brevets cités dans la description**

- WO 2013181656 A